Europäisches Patentamt

European Patent Office

Office européen des brevets

(11) Publication number: **0 032 833**
**A2**

# EUROPEAN PATENT APPLICATION

(21) Application number: **81300215.1**

(22) Date of filing: **19.01.81**

(51) Int. Cl.³: **A 23 L 1/24**
**// A23C21/00**

(30) Priority: **21.01.80 US 113836**

(43) Date of publication of application: **29.07.81**
**Bulletin 81/30**

(84) Designated Contracting States: **DE FR GB NL**

(71) Applicant: **STAUFFER CHEMICAL COMPANY, Westport Connecticut 06880 (US)**

(72) Inventor: **Fracaroli, Brenda Marie, 24 Independent Street, Tarrytown New York 10591 (US)**
Inventor: **Chang, Pei Kung, 232 Coachlight Square, Montrose New York 10548 (US)**

(74) Representative: **Smith, Sydney et al, Elkington and Fife High Holborn House 52/54 High Holborn, London WC1V 6SH (GB)**

(54) **Egg yolk containing compositions in which the egg yolk has been at least partially replaced.**

(57) In a product normally containing egg yolk, wherein the egg yolk is not heat set, at least 50% of a portion of said egg yolk is replaced, the percentage being on a dry weight basis of the egg yolk replaced, with a composition comprising from 50% to 100% of partially soluble modified whey solids derived as a precipitate from a process which comprises either (1) adding a divalent metal ion to a cheese whey solution and adjusting the pH to a value between 6 and 8.0 to cause precipitation of the modified whey solids or (2) adjusting the pH of a cheese whey solution containing at least 20% acid cheese whey to a value of between 6.0 and 8.0 to cause precipitation of the modified whey solids; and from 50% to 0% of another whey protein containing product, said percentages being based on the dry weight of said composition. This invention is particularly effective in food compositions such as sauces and dressings.

0032833

## Title

Egg Yolk Containing Compositions in
which the Egg Yolk has been at least
Partially Replaced

The present invention relates to the replacement of egg yolk in egg yolk-containing products wherein the egg yolk is not heat set.

Various products rely on the functional characteristics of the egg yolk, e.g., emulsification without heat setting the final product such as dressings, frozen desserts, icings and shampoo (non-food product). For instance, mayonnaise is a semisolid food dressing prepared by emulsifying a mixture of raw eggs or egg yolks, vegetable oil and vinegar or lemon juice usually together with various condiments. Salad dressing is prepared by using starch and less egg yolk (generally above 4%). Imitation mayonnaise usually contains similar ingredients with no limitations on amounts.

Since the cost of producing egg yolk solids has increased to a point where it is economically desirable to look for egg yolk substitutes, it would be desirable to replace egg yolk in egg yolk-containing products where the egg yolk is not intended to be heat set with a relatively inexpensive composition which will provide the functionality of the egg yolk replaced without substantially affecting the texture, taste and appearance of the product.

In accordance with the present invention, it has been found that in products normally containing egg yolk where the egg yolk is not heat set, at least 50% of a portion of the egg yolk can be replaced, the percentage being on a dry weight basis of the egg yolk replaced, with a composition comprising from about 50% to about 100% of a partially soluble modified whey solids derived as a precipitate from a process selected from the group consisting of (1) adding a divalent metal ion to a cheese whey solution and adjusting the pH to a value between about 6 and about 8.0 to cause precipitation of the modified whey solids and (2) adjusting the pH of a cheese whey solution containing at least 20% acid cheese whey to a value of between about 6.0 and about 8.0 to cause precipitation of the modified whey solids; and from about 50% to about 0% of another whey protein containing product, said percentage being based on the dry weight of said composition. Products prepared in accordance with the present invention using a one to one replacement ratio are characterized by physical properties substantially equivalent to the product with no egg yolk replacement. The process of the present invention is particularly adapted to preparing sauces and dressings, i.e., spoonable salad dressings and imitation mayonnaise.

## DETAILED DESCRIPTION OF THE INVENTION

Modified Whey Solids Product

The modified whey solids product suitable for use in the present invention can be produced by either the process described in U.S. Patent No. 3,560,219 to Attebery, or, preferably, the process described in U.S. Patent No. 4,036,999 to Grindstaff, the disclosures of which are incorporated herein by reference.

The modified whey solids product, generally, has the following typical analysis, (by weight):

Protein (N x 6.38) – about 15% to about 27%; preferably about 15% to about 18%; and more preferably from about 16% to about 17%;

Lactose – about 23% to about 54%; preferably about 40% to about 50%, and more preferably from about 41% to about 42%;

Minerals – about 20% to about 60%, preferably from about 24% to about 35% and more preferably about 26% to about 27%;

Moisture – about 2% to about 6%; preferably about 3% to about 5%;

Lactate – about 2% to about 4%; preferably about 2% to about 3%;

Citrate – about 2% to about 4%; preferably about 2.8% to about 3.4%;

Fat – about .5% to about 2.5%; preferably about 0.5% to about 1.5%.

A typical mineral analysis of the modified whey solids product (by weight) is:

Phosphorus - about 3% to about 6%;

Calcium - about 5% to about 10%;

Potassium - about 1.0% to about 3%;

Sodium - about 1.0% to about 3%;

Magnesium - about 0.1% to about 1%.

The product also contains a calcium phosphate-protein complex.

The process for forming the modified whey solids product by means of the Attebery patent comprises the addition of a divalent metal ion, such as calcium, to a raw whey feed, preferably at least 50% sweet whey, at temperatures below about 60°C. and adjusting the pH to a value between about 6 and 8 thereby causing precipitation of the modified whey solids product.

The process for forming modified whey solids product by the Grindstaff patent comprises adjusting the pH of a raw whey feed containing at least about 20%, preferably at least 60% and more preferably about 100% acid whey, the remainder being sweet whey to between about 6.0 to about 8 by the addition of a base whereby insoluble solids are formed within the raw whey feed. These insoluble solids which are preferred are separated from the whey feed and are collected as modified whey solids product.

The cheese whey used in preparing the materials used in the present invention can be acid cheese whey, sweet cheese whey, or mixtures thereof. More particularly, the cheese whey can be cottage cheese whey, casein whey, cheddar cheese whey, mozarella cheese whey, Swiss cheese whey or mixtures thereof as desired. No significant difference in the end use area as disclosed herein is known using products prepared from acid or sweet whey though products prepared from acid whey are preferred.

The precipitates can be formed at any temperature at which the whey solution is liquid at atmospheric pressure. The temperature is preferably from about 60°C. to 95°C. Yields increase with higher temperatures.

The separated insoluble solids are generally obtained in the form of an aqueous mixture. The solids content can vary according to the degree of water removal effected during the recovery of solids.

The aqueous mixture may be further processed by adding calcium ion thereto at a concentration of between about .002 grams to about .010 grams calcium ion per gram of insoluble solids (dry basis) contained in the mixture for the purpose of this invention. The calcium ion addition is effected by using a food grade calcium salt, as for example calcium dihydrogen phosphate, calcium chloride or calcium acetate, though calcium dihydrogen phosphate is preferred.

The calcium treated mixture is then heated at an elevated temperature of between about 125°F. (51.5°C.) to about 200°F. (93°C.) for a period of time to form a "calcium-heat-conditioned mixture". Likewise, the aqueous mixture may be heat conditioned without calcium treatment.

The partially soluble modified whey solids precipitate can, after separation from the mother liquor and any desired post treatment, be dried by any known means. Preferably, an atomizing dryer (vertical or horizontal), fluid bed dryer or flash or vacuum dryer or filter mat dryer is utilized.

Preferably, a spray dryer having an inlet temperature of 168°C. to 182°C. and an outlet temperature of 110°C. to 116°C. is used. The temperature must be high enough to effectively dry the product without causing burning or browning.

One can also include in the partially soluble modified whey solids, a small portion of a drying agent or a flow control agent selected from the group consisting of tricalcium phosphate, dicalcium phosphate, kaolin, diatomaceous earth, silica gel, calcium silicate hydrate and mixtures thereof.

In some cases, from about 50% to about 0% and preferably from about 25% to 0% of the composition used to replace the egg yolk can be another whey protein containing product. Illustrative of such compositions are dried whey, delactosed whey, skim milk (NFDM), alkali metal caseinate, delactosed demineralized whey, whey protein concentrate, permeate and delactosed permeate resulting from the ultrafiltration concentration of whey protein and the like and mixtures thereof. Preferably, the additional whey protein containing product is a whey protein concentrate and more preferably a heat denatured whey protein concentrate. A practical amount of the additional whey protein product is not more than about 10% due to cost and/or dilution of the effect of the modified whey solids product.

In the egg yolk containing products wherein the egg yolk is not heat set, which generally contain from about 1% to about 20% egg yolk on a dry solids basis at least a portion of the egg yolk can be replaced with the modified whey solids composition discussed hereinbefore. Effective results can be achieved replacing any small amounts, i.e., as little as 5% or up to and including all of the egg yolk.

Preferably, from about 25% to about 100%, and more preferably from about 25% to 75% of the egg yolk is replaced with the modified whey protein compositions. The amount replaced depends on the final area of use and the properties desired. For example, in the area of spoonable dressings and imitation mayonnaise, it is not suggested that more than about 60% of the egg yolk be replaced due to a slight loss in viscosity.

It has also been found in some areas of use that only 50% of the portion of egg yolk removed need be replaced with the modified whey solids composition. Preferably, at least 75% of the egg yolk portion removed is replaced and more preferably, the egg yolk portion removed is replaced on about a one to one dry weight basis with the modified whey solids composition. Amounts over a one to one replacement level can be used though significant excesses can adversely affect the final product.

Egg yolk contaning products where the egg yolk is non heat set are generally food products though egg yolk is also found in various non-food areas such as cosmetics, e.g., shampoos. The food area wherein not heat set egg yolk is found include sauces, dressings, such as pourable and spoonable salad dressings, and imitation mayonnaise; frozen desserts, confections and instant custards. Spoonable salad dressing and imitation mayonnaise are preferred. A spoonable dressing is defined as having a consistency sufficiently thick that it cannot be poured. A typical imitation mayonnaise may comprise from 2% to 7% (preferably 3% to 6%) starch, preferably a cooked starch which thickens on cooking so that a paste can form, from 20% to 40% (preferably 28% to 35%) water, from 3% to 15% (preferably 9% to 14%) sugar; from 14% to 30% (preferably 18% to 23%) vinegar; from 8% to 50% (preferably 22% to 28%) oil, from 1% to 8% (preferably 1% to 5%) egg yolk and any desired condiments. The egg yolk can be replaced in accordance with the present invention. Preferably, less than about 75% and more preferably less than about 60% of the egg yolk in the recipe is replaced.

If it is considered desirable to produce emulsified oil dressings having higher fat levels up to about 85%, a supplementary emulsifying agent may be used. Suitable supplementary emulsifying agents are mono- and di-esters of higher fatty acids and glycerin, mono-esters of high fatty acids and sorbitan, mono-esters of higher fatty acids and propylene glycol, higher fatty acids of polyethylene, esters of higher fatty acids and polyglycerols and mono-esters of higher fatty acids and polyoxyethylene sorbitans. By higher fatty acids is meant those fatty acids having a carbon chain length of from 14 to 20. The supplementary emulsifiers are used at a level of from about 0.1% to about 0.4% by weight of the supplementary emulsifier, based on the weight of the dressing. As indicated, however, the supplementary emulsifiers are required only when the fat level of the dressing exceeds about 50% by weight. All percentages used herein are by weight unless otherwise specified.

The modified whey solids can be easily included in the product by blending the modified whey solids with the egg yolk solids at any time subsequent to any cooking stage. For instance, in preparing an imitation mayonnaise, a starch paste is first prepared by cooking and the egg yolk is added after the paste is cooled. If liquid egg yolks are used, the modified whey solids can be diluted with the liquid egg yolks and blended with other dry ingredients for uniform admixture prior to the addition of any oily component.

As used herein, egg yolk is intended to include dried as well as liquid egg yolk separated from the albumen. Any amounts of egg yolk or replacement thereof are based on dried egg yolk solids.

The present invention is further illustrated in the examples which follow.

## EXAMPLES 1-4

An imitation mayonnaise type product is prepared using a partially soluble modified whey solids in place of egg yolk normally present in the composition. The partially soluble modified whey solids are prepared by neutralizing acid whey with base followed by isolating the precipitated modified whey solids. The composition of the products is shown in Table I below (percent by weight basis):

### TABLE I

| EXAMPLE | 1 | 2 | 3 | 4 |
|---|---|---|---|---|
| Modified Food Starch | 5.0 | " | " | " |
| Water | 31.0 | " | " | " |
| Sucrose | .11.8 | " | " | " |
| Distilled White Vinegar | 21.1 | " | " | " |
| Salt | 1.7 | " | " | " |
| Dry Mustard | 0.39 | " | " | " |
| Dry Paprika | 0.07 | " | " | " |
| Soy Bean Oil | 25.94 | " | " | " |
| Dried Egg Yolk Solids (36% Protein) | 3.0 | 2.25 | 1.50 | 0.75 |
| Modified Whey Solids | --- | 0.75 | 1.50 | 2.25 |
|  | 100.00 | 100.00 | 100.00 | 100.00 |

The imitation mayonnaise type product is prepared by forming a starch paste by mixing the starch, water, vinegar, salt, mustard, paprika and 3/4 of the sucrose, heating to about 88°C. for five minutes and cooling to about 14°C. The egg yolk solids, the modified whey solids if present, and the remaining sucrose are dry blended. The starch paste at about 14°C. is placed in the bowl of a high speed blender and the egg yolk solids blend is added slowly. The mixture is blended for 30 seconds and then the oil is added slowly. After blending further for 30 seconds, the product is homogenized at 2000 psi and refrigerated.

The viscosity of the above prepared imitation mayonnaise products is tested at 5°C. using a Brookfield RVT viscometer using spindle C at 5 rpm with the following results:

## TABLE II

| EXAMPLE | % YOLK | % MODIFIED WHEY PRODUCT | VISCOSITY (CPS) |
|---------|--------|-------------------------|-----------------|
| 1 | 100% | 0% | $7.9 \times 10^4$ |
| 2 | 25% | 25% | $9.4 \times 10^4$ |
| 3 | 50% | 50% | $8.3 \times 10^4$ |
| 4 | 25% | 75% | $4.3 \times 10^4$ |

The viscosity of Example 3 (50% replacement) is equivalent to the control (Example 1). Replacement of 75% of the egg yolk (Example 4) provides a product with a viscosity too thin to be called "spoonable" but useful as a pourable dressing.

The products of Example 1 (100% yolk) and Example 3 (50% replacement) are centrifuged at 19,000 rpm for 1.5 hours to measure stability. Both products separate similarly into two fractions. No visual differences are detected.

The products of Example 1 (100% yolk) and Example 3 (50% replacement) are submitted to a ten-member taste panel for flavor and texture evaluation. The results set forth in Table III below indicate that the product of Example 3 is preferred over the control and rated higher in both flavor and texture.

## TABLE III

Taste panel results - IMITATION MAYONNAISE

| PRODUCT TESTED | PRODUCT EXAMPLE 1 (Control 100% yolk) | | PRODUCT EXAMPLE 3 (50% re- placed | | NO PREFERENCE |
|---|---|---|---|---|---|
| Preference (out of 10) | 1 | | 8 | | 1 |
| Average Product Rating [a] | Flavor | Texture | Flavor | Texture | |
| | 4.0 | 3.0 | 3.0 | 2.8 | --- |
| Average Similarity Rating [b] | --- | | Flavor | Texture | --- |
| | | | 3.8 | 2.7 | |

a = Scale of 1 to 7; 1- like extremely, 2 - like very much, 3 - like, 4 - neither like or dislike, 5 - dislike, 6 - dislike very much and 7 - dislike extremely.

b = Scale of 1 to 6; 1 - extremely similar, 2 - very similar, 3 - similar, 4 - slightly dissimilar, 5 - very dissimilar, 6 - extremely dissimilar.

As can be seen from the data, the panel preferred the product of the invention 8 to 1. The panel considered the flavor and texture of the product of the invention to be improved over the control without jeopardizing the similarity of the control.

EXAMPLES 5-6

The procedure of Examples 1 and 3 are repeated as Examples 5 and 6, Example 5 being a control. In Example 6, one-half of the egg yolk solids (1.50%) is replaced with a blend of 90% modified whey solids as used in Example 1 and 10% of a heat denatured whey protein concentrate prepared by dissolving a dried 50% whey protein concentrate prepared by the ultrafiltration of acid whey to 20-25% solids, heating until the temperature reaches 65°C., cooling and drying. The procedure of Example 1 is followed except 90% of the sucrose is added in the initial starch paste and the mixture is blended for only 15 seconds prior to the addition of the oil. Viscosity data using the test described in Example 1 indicates that the product of Example 6 (5.52 x 10$^4$ cps at pH 3.9 and 6°C.) is slightly thinner than the control Example 5 (6.0 x 10$^4$ cps at pH 3.6 and 6°C.). However, visual observations did not indicate that this was a significant problem and the product is considered acceptable.

The finished imitation mayonnaise products are evaluated for stability using both centrifugation and heat. Based on the results of the centrifugation test, both the control of Example 5 and the test product of Example 6 are more stable than a commercially available imitation mayonnaise and a commercially available mayonnaise. The product of the invention is at least as stable as the control.

In a heat stability test, the laboratory prepared products are at least as stable as the commercial products and the product of the invention can be used to replace 50% of the egg yolk in imitation mayonnaise with no adverse affect.

The flavor and texture are evaluated using a 25-member taste test panel. The product of the invention (Example 6) is slightly preferred over the control (Example 5). The products are rated slightly similar in flavor and texture.

-15-

EXAMPLES 7-9

Spoonable salad dressing having high and low oil contents were prepared from the following formulations.

TABLE VI

| EXAMPLE | 7 | 8 | 9 |
|---|---|---|---|
| Ingredients % | High Oil | Low Oil | Low Oil Control |
| Soybean Oil[A] | 45.00 | 11.0 | 11.0 |
| Water | 24.34 | 37.3 | 37.3 |
| Vinegar[B] | 16.63 | 25.4 | 25.4 |
| Sucrose | 4.55 | 13.8 | 13.8 |
| Egg Yolk Solids[C] | 2.84 | 2.0 | 4.0 |
| Whey Blend[G] | 2.84 | 2.0 | ---- |
| Starch-Cookup[D] | 1.98 | 6.0 | 6.0 |
| Starch-Instant[E] | 1.00 | ---- | ---- |
| Salt | 0.67 | 2.0 | 2.0 |
| Dry Mustard[F] | 0.15 | 0.5 | 0.5 |
| | 100.0 | 100.0 | 100.0 |

A - Star Brand - Soy Bean Salad Oil.
B - Distilled White Vinegar.
C - Henningsen Foods, Inc.
   36% Protein
D - Purity 420-A, Modified Food Starch, National
   Starch and Chemical Corp.
E - Instant Clearjel, Modified Food Starch, National
   Starch and Chemical Corp.
F - Colman's Dry Mustard
G - Blend of 90% modified whey solids/10% heat denatured
   whey protein concentrate as described in Example
   5.

The salad dressing of Example 7 was prepared using the following procedure:

1.  Prepare starch paste as follows:
    Cook 50% of water, 50% of vinegar, sucrose, mustard,
    and cook starch on hot plate with stirrer to
    87.8°C. for 5 minutes.

2.  Cool paste to approximately 15.6°C; Add to blender.

3.  Premix egg yolk solids and whey blend in remaining
    water, then add with mixing instant starch.

4.  Blend mixture in Step No. 3 with starch paste
    (approximately 30 seconds).

5.  Add oil (about 4.4°C.) _very_ _slowly_ while blending.

6.  Slowly add remaining vinegar.

7.  Scrape sides.

8.  Continue blending (approximately 1 minute).

9.  Pass through homogenizer twice (approximately
    2000 psi).

10. Refrigerate (4.4°C.).

The salad dressing of Examples 8 and 9 were
prepared using the following procedure:

1.  Prepare starch paste as follows:
    Cook water, vinegar, 90% sucrose, mustard, salt
    and starch on hot plate with a stirrer to 87.8°C.
    for 5 minutes.

2.  Cool paste to 15.6°C.

3.  Preblend remaining dry ingredients.

The viscosity, oil stability and flavor data
was determined as follows:

### TABLE VII

### VISCOSITY, STABILITY AND FLAVOR DATA

### OF SPOONABLE SALAD DRESSINGS OF EXAMPLES 7-9

| | Viscosity[A] (CPS) | Stability[B] (% Separation) | Flavor |
|---|---|---|---|
| Example 7 (45% oil) | $3.25 \times 10^4$ | No separation | Acceptable |
| Example 9 (11% oil-control | $4.66 \times 10^4$ | No separation | Acceptable |
| Example 8 (11% oil - 2% whey blend) | $4.1 \times 10^4$ | No separation | Acceptable |
| Mayonnaise | $3.84 \times 10^4$ | 3 | Acceptable |
| Commercial Salad Dressing (42.8% oil) | $4.36 \times 10^4$ | 8 | Acceptable |

A. Brookfied RVT Viscometer, 5 RPM, Spindle C at 7.2°C.

B. Stability - % Separation

    1. 50 grams of each sample in centrifuge tube - graduated.

    2. Heat samples for 1 hr. in waterbath at 37.8°C.

    3. Centrifuge 1 hr. approximately 2250 rpm

    4. Measure separation - $\dfrac{mL\ separation}{50} \times 100 =$

       % separation

# 0032833

## EXAMPLES 10-12

Salad dressings having low, medium and high oil content were prepared and compared to egg yolk controls using the formulation and procedure of Example 6 for the medium oil product and the formulation and procedure of Examples 7 and 8 for the high and low oil products, respectively. The egg yolk solids used in these examples were obtained from Marshall Foods. All the products were stable with no oil separation. The following viscosity results were obtained.

## TABLE VIII

Viscosity Data for Examples 10-12

| Product of Example | Viscosity $^A$ (CPS) | Control |
|---|---|---|
| 10 (Low Oil) | $5.3 \times 10^4$ | $4.41 \times 10^4$ |
| 11 (Medium Oil) | $5.16 \times 10^4$ | $5.28 \times 10^4$ |
| 12 (High Oil) | $7.3 \times 10^4$ | $8.1 \times 10^4$ |

Claims:

1.    A product normally containing egg yolk wherein
the egg yolk is not heat set, characterised in that
at least 50% of a portion of said egg yolk is replaced
(the percentage being on a dry weight basis of the
egg yolk replaced,) with a composition comprising
from 50% to 100% of a partially soluble modified whey
solids derived as a precipitate from
(1)    adding a divalent metal ion to a cheese whey
solution and adjusting the pH to a value between
6.0 and 8.0 to cause precipitation of the modified
whey solids and/or
(2)    adjusting the pH of a cheese whey solution
containing at least 20% acid cheese whey to a value
of between 6.0 and 8.0 to cause precipitation of
the modified whey solids and from about 50% to about
0% of another whey protein containing product, said
percentage being based on the dry weight of said
composition.

2.    A product as claimed in claim 1 characterised
in that the modified whey solids comprises 23-54%
lactose, 20-60% minerals and 15-27% protein, by
weight.

3.    A product as claimed in claim 1 or claim 2
characterised in that the modified whey solids
is derived by adjusting the pH of a cheese whey
solution containing at least 60% acid cheese whey
to a value of between 6.0 and 8.0 to cause precipitation of said modified whey solids.

4.    A product as claimed in claim 1 or claim 2
characterised in that the cheese whey solution in
subsection (2) is 100% acid whey.

5. The product as claimed in any of claims 1 to 4 characterised in that said egg yolk portion replaced comprises from 25% to 100% of the egg yolk in said product.

6. A product as claimed in any of claims 1 to 5 characterised in that at least 75% of the egg yolk portion is replaced with said composition.

7. A product as claimed in claim 6 characterised in that the egg yolk portion is replaced on approximately a one to one dry weight basis with said composition.

8. A product as claimed in any of claims 1 to 7 characterised in that the composition serving as a replacement comprises from 75% to 100% of the modified whey solids and from 25% to 0% of the other whey protein containing product.

9. A product as claimed in any of claims 1 to 8 characterised in that it is in the form of a spoonable dressing, which dressing has the following composition:

| Starch | from 2% to 7%; |
| Water | from 20% to 40%; |
| Sugar | from 3% to 15%; |
| Vinegar | from 14% to 30%; |
| Oil | from 8% to 50%; |

Egg yolk (on a dry solids basis) from 1% to 8%; wherein at least 50% of a portion of said egg yolk is replaced, the percentage being on a dry weight basis of the egg yolk replaced, with a composition comprising from 50% to 100% of a partially soluble modified whey solids derived as a precipitate from a process which comprises

(1) adding a divalent metal ion to a cheese whey
solution and adjusting the pH to a value between
6 and 8.0 to cause precipitation of the modified
whey solids or

(2) adjusting the pH of a cheese whey solution
containing at least 20% acid cheese whey to a value
of between 6.0 and 8.0 to cause precipitation of
the modified whey solids; and from 50% to 0% of
another whey protein containing product, said
percentage being based on the dry weight of said
composition.

10. A process for preparing a product normally
containing egg yolk wherein the egg yolk is not
heat set, characterised in that one replaces at
least 50% of a portion of the egg yolk, the percentage being on a dry weight basis of the egg yolk
replaced, with a composition comprising from 50%
to 100% of a partially soluble modified whey solids
derived as a precipitate from a process which
comprises

(1) adding a divalent metal ion to a cheese whey
solution and adjusting the pH to a value between
6.0 and 8.0 to cause precipitation of the modified
whey solids or

(2) adjusting the pH of a cheese whey solution
containing at least 20% acid cheese whey to a value
of between 6.0 and 8.0 to cause precipitation
of the modified whey solids; and from 50% to 0%
of another whey protein containing product, said
percentage being based on the dry weight of
said composition.